Europäisches Patentamt

European Patent Office

Office européen des brevets

(11) Numéro de publication: **0 247 916 B1**

(12) # FASCICULE DE BREVET EUROPEEN

(45) Date de publication de fascicule du brevet: **30.09.92**   (51) Int. Cl.⁵: **G10K 11/00**

(21) Numéro de dépôt: **87400981.4**

(22) Date de dépôt: **29.04.87**

(54) **Dispositif de positionnement d'une sonde d'exploration.**

(30) Priorité: **30.04.86 FR 8606319**

(43) Date de publication de la demande:
**02.12.87 Bulletin  87/49**

(45) Mention de la délivrance du brevet:
**30.09.92 Bulletin  92/40**

(84) Etats contractants désignés:
**AT BE CH DE ES FR GB GR IT LI LU NL SE**

(56) Documents cités:
**EP-A- 0 042 945**
**EP-A- 0 169 311**
**DE-B- 2 826 828**
**DE-B- 2 852 560**
**US-A- 4 196 630**

(73) Titulaire: **TECHNOMED INTERNATIONAL**
**Parc d'Activités du Chêne Boulevard des**
**Droits de l'Homme**
**F-69500 Bron(FR)**

Titulaire: **INSTITUT NATIONAL DE LA SANTE**
**ET DE LA RECHERCHE MEDICALE (INSERM)**
**101, rue de Tolbiac**
**F-75654 Paris Cédex 13(FR)**

(72) Inventeur: **Hascoet, Gérard**
**10 avenue Colonel Bonnet**
**F-75016 Paris(FR)**
Inventeur: **Lacruche, Bernard**
**29, rue Alphonse Bordereau**
**F-77500 Chelles(FR)**
Inventeur: **Mestas, Jean-Louis**
**1, Impasse Marc Seguin**
**F-69680 Chassieu(FR)**
Inventeur: **Cathignol, Dominique**
**14, rue du Fort**
**F-69740 Genas(FR)**

(74) Mandataire: **Portal, Gérard et al**
**Cabinet Beau de Loménie 55, rue d'Amster-**
**dam**
**F-75008 Paris(FR)**

Rank Xerox (UK) Business Services

# Description

L'invention concerne essentiellement un dispositif de positionnement dans l'espace d'une sonde d'exploration comprenant un ensemble d'articulations disposé dans l'espace de manière à occuper un volume limité, avantageusement réalisé étanche aux fluides, et appareil générateur d'impulsions pour la destruction de cibles telles que des tissus, concrétions, notamment des lithiases rénales biliaires incorporant un tel dispositif.

Il est connu par le brevet US RIEBER n° 2,559,227 un appareil d'ondes de choc de fréquence élevée, comprenant un réflecteur ellipsoïdal tronqué 80 dans lequel sont générées des impulsions par décharge ou arc électrique entre deux électrodes concourantes au premier foyer de l'ellipsoïde, de manière à détruire une cible disposée au deuxième foyer de l'ellipsoïde.

Le problème qui se pose en pratique d'une manière aigüe est le positionnement correct de la cible à détruire exactement au deuxième foyer de l'ellipsoïde.

Pour ce faire, il est nécessaire de repérer et de déterminer la position exacte de la cible à détruire, par exemple une concrétion, notamment une lithiase rénale ou biliaire (les "calculs").

Pour le repérage et le positionnement de telles cibles, on peut utiliser diverses sondes d'exploration, que ce soit à rayons X ou le plus souvent de préférence à ultra-sons.

Par exemple, le document FR-2 502 485 décrit un appareil d'exploration à sonde pour le diagnostic par ultra-sons, comprenant un bras essentiellement rigide 20 ayant une première extrémité, une deuxième extrémité.

La première extrémité est articulée en 30 relativement à un bâti support 12 par au moins un axe d'articulation, et de préférence par au moins deux axes 30, 28, 26.

La sonde d'exploration 10 est montée sur un élément support 24 relié à la deuxième extrémité du bras 20 par au moins deux axes d'articulation 34, 32, perpendiculaires.

On observera que la sonde d'exploration 10 est montée en rotation sur elle-même par la présence d'une articulation propre 36 dont l'axe est situé dans le prolongement du bras 20. En outre, la première extrémité du bras 20 est reliée à l'élément support 12 par un autre bras 18.

On conçoit ainsi qu'au niveau de la deuxième extrémité du bras 20 articulé à l'élément support 24 de la sonde 10 on ne dispose que de deux axes d'articulation 32, 34. Ainsi, le nombre de degrés de liberté pour le positionnement de la sonde 10 est limitée.

Or, ceci génère en pratique des inconvénients majeurs en gênant considérablement les possibilités de positionnement dans l'espace de la sonde d'exploration en vue de repérer et positionner un objet articulé dans le cas où on exige un positionnement précis d'une cible, comme cela est indispensable dans les appareils générateurs d'ondes de choc, focalisant ces ondes de choc en un foyer cible (voir brevets US RIEBER n° 2,559,227, FR-2 247 195, notamment).

De même, on connaît encore par le document FR-2 474 186 un dispositif de positionnement dans l'espace d'une sonde d'exploration 14 qui présente les mêmes inconvénients de limitation de mouvement de la sonde 14 à la deuxième extrémité du bras 7 articulé sur l'élément support 12 de la sonde.

Or, la sonde 14 doit pouvoir être positionnée dans une position quelconque de l'espace en son voisinage immédiat.

Ceci ne peut être obtenu par le dispositif de positionnement décrit dans ce document.

On peut encore citer le document EP-A 1-0169311 qui décrit un dispositif de positionnement dans l'espace d'une sonde d'exploration 28 d'une structure compliquée et volumineuse et présente également les mêmes inconvénients majeurs.

Le document US-A-4 196 630 est encore relatif à un dispositif de positionnement dans l'espace d'une sonde d'exploration P, d'une structure compliquée et volumineuse comprenant de nombreux bras. Le dernier bras, référence 120, est de grande dimension, et ne permet pas de positionner la sonde P dans une position quelconque de l'espace en son voisinage immédiat. Au contraire, il est dit en colonne 7, lignes 13 à 15, que les articulations 123, 124 obligent la partie d'extrémité 122 à se déplacer seulement dans le plan de balayage de la sonde.

Le document DE-AS-28 52560 décrit un dispositif de positionnement dans l'espace d'une sonde d'exploration 1 comprenant seulement trois axes d'articulation D1, D2 et D3 à la deuxième extrémité 8 du bras 10. La construction de l'élément 3 monté en translation axiale ne permet également pas d'offrir un maximum de possibilités de positionnement dans l'espace de la sonde 1.

La présente invention a donc pour but de résoudre le problème technique consistant en la réalisation d'un dispositif de positionnement dans l'espace d'une sonde d'exploration offrant le maximum de possibilités de positionnements dans l'espace de cette sonde d'exploration, au voisinage immédiat de ladite sonde.

La présente invention a encore pour but de résoudre le problème technique consistant en la réalisation d'un dispositif de positionnement dans l'espace d'une sonde d'exploration permettant de passer sous le corps d'un patient dont une zone de son corps est à explorer avec ladite sonde.

La présente invention a encore pour but de résoudre le nouveau problème technique consistant en la réalisation d'un dispositif de positionnement dans l'espace d'une sonde d'exploration, comprenant un bras disposé toujours sensiblement en position horizontale, en position de travail de la sonde d'exploration de sorte que la deuxième extrêmité du bras qui est reliée à la sonde d'exploration soit de position essentiellement fixe.

La présente invention a encore pour autre but de résoudre le nouveau problème technique consistant en la réalisation d'un dispositif de positionnement dans l'espace d'une sonde d'exploration permettant une immersion de la sonde dans un fluide, en particulier un liquide tel qu'une huile ou de l'eau.

Ces problèmes techniques sont résolus pour la première fois par la présente invention, avantageusement simultanément.

Ainsi, la présente invention fournit un dispositif de positionnement dans l'espace d'une sonde d'exploration, par exemple une sonde à ultrasons, de type à 6 axes d'articulation au total, comprenant un bras essentiellement rigide ayant une première extrémité et une deuxième extrémité, la première extrémité est articulée relativement à un bâti support par au moins un axe d'articulation, de préférence au moins deux axes d'articulation, et ladite sonde d'exploration est montée sur un élément support relié à ladite deuxième extrémité du bras par au moins deux axes d'articulation perpendiculaires, caractérisé en ce que l'élément support de la sonde d'exploration est relié à la deuxième extrémité du bras par un ensemble de quatre axes d'articulation, disposés successivement perpendiculairement entre eux, un élément de liaison coudé est prévu pour relier le deuxième axe d'articulation et les troisième axe d'articulation respectivement repéré depuis la deuxième extrémité du bras, de manière que le troisième axe d'articulation soit disposé hors de l'empattement défini par les premier et deuxième axe d'articulation repérés depuis la deuxième extrémité du bras, ledit ensemble étant disposé dans l'espace de manière à occuper un volume limité, au voisinage immédiat de ladite sonde d'exploration tout en offrant un maximum de possibilités de positionnements dans l'espace de ladite sonde.
Ceci offre l'avantage technique majeur de permettre une faculté de positionnements illimités dans l'espace de la sonde d'exploration dans un espace ou volume limité ou réduit, ce qui est souvent le cas en pratique lors de l'utilisation de ce dispositif.
Selon un autre mode de réalisation particulièrement avantageux, le dispositif de positionnement selon l'invention est caractérisé en ce que le point d'intersection entre le troisième axe d'articulation et le quatrième axe d'articulation repéré depuis la deuxième extrémité du bras, se déplace dans un plan perpendiculaire au deuxième axe d'articulation repéré depuis la deuxième extrémité du bras en décrivant au moins un arc de cercle lors d'une rotation autour du deuxième axe d'articulation.

Selon une autre caractéristique particulièrement avantageuse du dispositif selon l'invention, celui-ci est caractérisé en ce que la sonde d'exploration est montée en rotation sur elle-même, selon un axe de rotation qui coïncide avec le quatrième axe d'articulation repéré depuis la deuxième extrémité du bras. De préférence, le plan général de l'élément support de la sonde sur le quatrième axe d'articulation repéré depuis la deuxième extrémité du bras est décalé dans l'espace relativement au point d'intersection du troisième axe et du quatrième axe d'articulation repéré depuis la deuxième extrémité du bras, ce décalage étant disposé avantageusement vers l'extérieur en position de travail (vers le patient).

Selon une autre caractéristique avantageuse du dispositif de positionnement selon l'invention, chaque articulation comprenant une partie fixe et une partie mobile, le dispositif selon l'invention est caractérisé en ce que la partie fixe et la partie mobile du deuxième axe d'articulation repéré depuis la deuxième extrémité du bras sont situées dans le prolongement l'une de l'autre. Certaines au moins des parties fixes des autres axes d'articulation peuvent être perpendiculaires aux parties mobiles associées, en particulier pour le troisième et le quatrième axe d'articulation.

Selon encore une autre caractéristique avantageuse de l'invention, la longueur du bras est telle que la deuxième extrémité du bras supportant la première articulation parmi les quatre articulations de la deuxième extrémité du bras, est sensiblement à la verticale et avantageusement au-dessus, de la zone d'exploration ou d'examen.

Selon encore une autre caractéristique particulièrement intéressante du dispositif de positionnement selon l'invention, la longueur du bras est telle qu'en position de travail le bras est toujours sensiblement en position horizontale tandis que de préférence le deuxième axe d'articulation repéré depuis la deuxième extrémité du bras est toujours maintenu sensiblement dans un plan vertical.

Selon encore une autre caractéristique particulièrement avantageuse du dispositif selon l'invention, la longueur du bras est telle que la deuxième extrémité du bras constitue le sommet, de position sensiblement fixe, d'un cône d'angle au sommet compris entre 45 et 90°, de préférence entre 50 et 70°, encore de préférence d'environ 60°, dans lequel se déplace le point d'intersection des troisième et quatrième axes d'articulation repérés depuis la deuxième extrémité du bras.

Selon encore une autre caractéristique particulièrement avantageuse du dispositif selon l'invention, l'ensemble des articulations de la deuxième extrémité du bras est réalisé étanche aux fluides, de préférence aux liquides, de manière à être immergeable dans un fluide, de préférence un liquide, en particulier de l'eau ou une huile.

Selon un mode de réalisation préféré, la sonde est disposée dans un container étanche qui est fixé de manière démontable dans la partie rotative du quatrième axe d'articulation repéré depuis la deuxième extrémité du bras, qui comporte avantageusement une ouverture traversante dans laquelle la sonde peut être insérée.

Selon encore une autre caractéristique particulière du dispositif selon l'invention, le premier axe d'articulation solidaire de la deuxième extrémité du bras est disposé perpendiculaire à l'axe longitudinal du bras.

De préférence, le deuxième axe d'articulation depuis la deuxième extrémité du bras est disposé dans un plan perpendiculaire au premier axe d'articulation, qui est distinct relativement au plan de pivotement du bras défini par l'articulation solidaire de la première extrémité du bras.

Selon encore une autre caractéristique particulièrement avantageuse du dispositif de positionnement selon l'invention, la partie fixe du quatrième axe d'articulation depuis la deuxième extrémité du bras, a en coupe un profil en L dont la base du L est fixée à la partie rotative du cinquième axe d'articulation depuis la deuxième extrémité du bras, tandis que la barre du L comporte l'ouverture traversante précitée dans laquelle la partie mobile est montée rotative et constitue l'élément support de la sonde d'exploration.

Selon également une caractéristique préférée, l'élément support de la sonde d'exploration, qui est de préférence constitué par la partie rotative du quatrième axe d'articulation depuis la deuxième extrémité du bras, comprend des moyens de mise en rotation, tels que des dents entraînées en rotation par un organe moteur.

On peut également prévoir avantageusement que le système d'articulation de la première extrémité du bras comprend un système à contrepoids permettant une manipulation aisée du bras et son maintien à une position quelconque de celui-ci. De préférence, le dispositif de positionnement selon l'invention comprend un moyen de freinage, tel qu'un patin, de rotation à chaque articulation pour maintenir le positionnement du bras à une position quelconque fixée manuellement par l'opérateur.

Selon un deuxième aspect, l'invention comprend également un appareil générateur d'impulsions de fréquence élevée pour la destruction de cibles telles que des tissus, concrétions, notamment des lithiases rénales, biliaires, caractérisé en ce qu'il comprend au moins un dispositif de positionnement tel que précédemment défini. De préférence, chaque articulation est pourvue d'un détecteur d'angle de rotation dont la valeur mesurée peut être prise en compte automatiquement par un calculateur et servir à déterminer la position exacte dans l'espace de la sonde d'exploration et donc de ladite cible.

On comprend que l'on obtient ainsi tous les avantages précédemment mentionnés.

En particulier grâce à la structure complète du bras selon l'invention, qui est dans sa totalité partie intégrante de l'invention, on obtient pratiquement un nombre illimité de possibilités de positionnement dans l'espace de la sonde d'exploration, au voisinage immédiat de la sonde, dans un volume très réduit.

En outre, grâce à la structure complète du bras et à la disposition relative des articulations, principalement des quatre articulations successives à la deuxième extrémité du bras, il est possible d'aller sous le corps d'un patient allongé sensiblement parallèlement au bras, en position de travail de celui-ci. L'opérateur, en outre, n'est pas gêné par le dispositif de fixation de la première extrémité du bras relativement au bâti support d'autant plus que la longueur du bras est telle qu'en position de travail le bras est toujours sensiblement en position horizontale, sa deuxième extrémité étant avantageusement sensiblement à la verticale, et au-dessus de la zone d'exploration, comme précédemment mentionné.

En outre, on observera avantageusement que selon l'invention la partie mobile ou rotative de la première articulation solidaire de la deuxième extrémité du bras est rotative dans un plan distinct du plan de pivotement du bras relativement à l'articulation solidaire de la première extrémité du bras, cette partie rotative de la première articulation solidaire de la deuxième extrémité du bras étant avantageusement mise en rotation autour d'un axe horizontal.

En outre, selon une caractéristique particulièrement préférée du dispositif selon l'invention, la partie fixe de la deuxième articulation depuis la deuxième extrémité du bras est très courte et pivote dans le même plan que la partie rotative de la première articulation solidaire de la deuxième extrémité du bras. D'autre part, l'élément coudé est solidarisé de telle façon à la partie rotative de la deuxième articulation solidaire de la deuxième extrémité du bras, que les troisième et quatrième articulations solidaires de l'extrémité opposée de l'élément coudé se trouvent, en position de travail, d'exploration, de la sonde, du même côté du bras que le corps du patient, et hors de l'empattement du bras et de la deuxième articulation solidaire de la deuxième extrémité du bras.

De même, la pièce en L formant la partie fixe de la quatrième articulation depuis la deuxième extrémité du bras est solidaire de la troisième articulation depuis la deuxième extrémité du bras par l'extrémité libre de la base du L opposée à la barre du L de manière à décaler la partie rotative supportant la sonde vers l'extérieur, c'est-à-dire vers le patient. On obtient ainsi tous les avantages précédemment mentionnés.

D'autre buts, caractéristiques et avantages de l'invention apparaîtront clairement à la lumière de la description explicative qui va suivre faite en référence aux figures annexées représentant le mode de réalisation actuellement préféré du dispositif de positionnement selon l'invention, donné simplement à titre d'illustration et qui ne saurait donc en aucune façon limiter la portée de l'invention.

Dans les dessins :

- La figure 1 est une vue schématique des parties essentielles du dispositif de positionnement dans l'espace d'une sonde d'exploration selon l'invention utilisée dans un appareil de destruction de cible (concrétion)en position de départ dite "zéro"
- La figure 2 est une vue en perspective du dispositif de positionnement selon l'invention, agrandie, selon la flèche II de la figure 1 ;
- La figure 3 est une vue en coupe selon l'ensemble III de la figure 2 ;
- la figure 4 est une vue en coupe selon l'ensemble IV de la figure 2 ; et
- la figure 5 est une vue en coupe selon l'ensemble V de la figure 2, avec arrachement partiel.

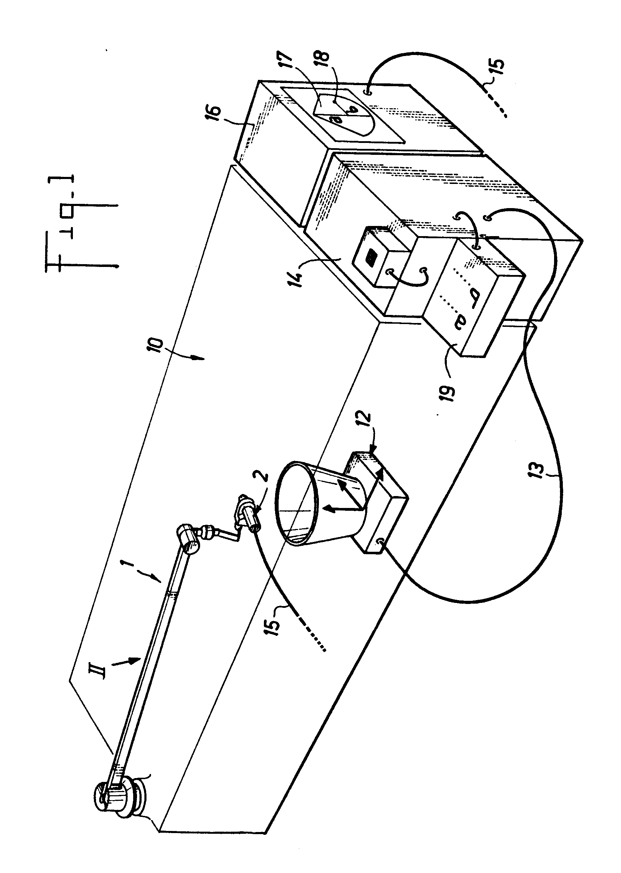

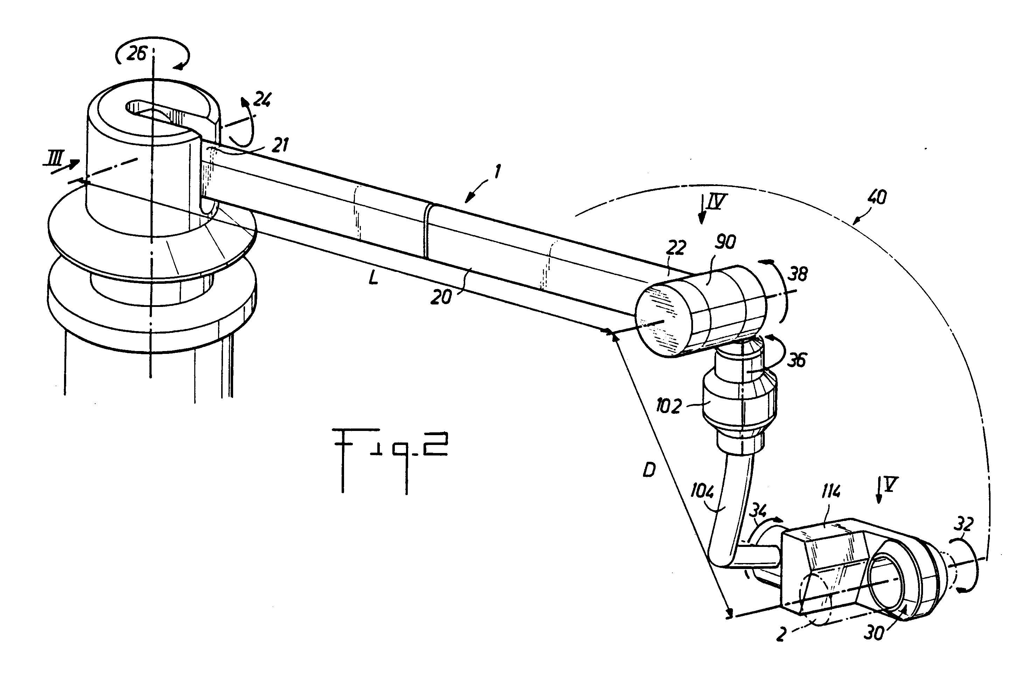

En référence particulièrement aux figures 1 et 2, un dispositif de positionnement dans l'espace selon l'invention, représenté par le numéro de référence général 1, d'une sonde d'exploration repérée par le numéro de référence général 2 est, selon le mode de réalisation préféré, incorporé dans un appareil représenté par le numéro de référence général 10 générateur d'impulsions pour la destruction de cibles telles que des tissus, concrétions, notamment des calculs rénaux, biliaires. Ainsi, on a représenté les organes essentiels de cet appareil. Ces organes essentiels sont un réflecteur ellipsoïdal représenté par le numéro de référence général 12, qui est capable de se déplacer dans l'espace selon les trois axes x, y et z. La structure de ce réflecteur ellipsoïdal est par exemple décrite par RIEBER dans le brevet US 2,559,227, ou encore dans le document FR-2 247 195 ou encore dans la demande de brevet français antérieure des demanderesses n° 86 01380 = US 4 730 614 et US 4 866 330.

Le déplacement dans l'espace du réflecteur ellipsoïdal 12 peut être commandé automatiquement en étant relié par un conducteur 13 à un dispositif de commande automatique 14 incluant un calculateur, tel qu'un ordinateur. La sonde d'exploration 2, par exemple une sonde à ultra-sons à plan de coupe sectorielle transmet ces informations par un conducteur 15 à un dispositif de visualisation 16 comportant un écran 17 sur lequel on peut observer la cible 18, telle qu'une concrétion (calcul rénal, biliaire, etc.).

Le positionnement de cette cible 18 par rapport au sommet du secteur est donné par les valeurs a et b, de manière classique, bien connue à l'homme de l'art des ultra-sons ou de l'échographie.

Ces valeurs a et b sont ensuite introduites dans le calculateur 14 au moyen du clavier 19, le calculateur réalisant ensuite les calculs permettant de positionner la cible 18 exactement au second foyer de l'ellipsoïde par un déplacement adéquat du réflecteur 12.

Ceci est rendu possible par le repérage et la détermination de la position exacte de la cible à détruire, par exemple une concrétion, notamment un calcul rénal ou biliaire.

Le repérage et la détermination de la position exacte de la cible à détruire sont rendus aisés par le dispositif de positionnement 1 selon l'invention qui va être maintenant décrite plus en détail en référence plus particulièrement à la figure 2.

Ce dispositif de positionnement 1 dans l'espace d'une sonde d'exploration 2, par exemple une sonde à ultra-sons, comprend un bras 20 essentiellement rigide ayant une première extrémité 21 et une deuxième extrémité 22.

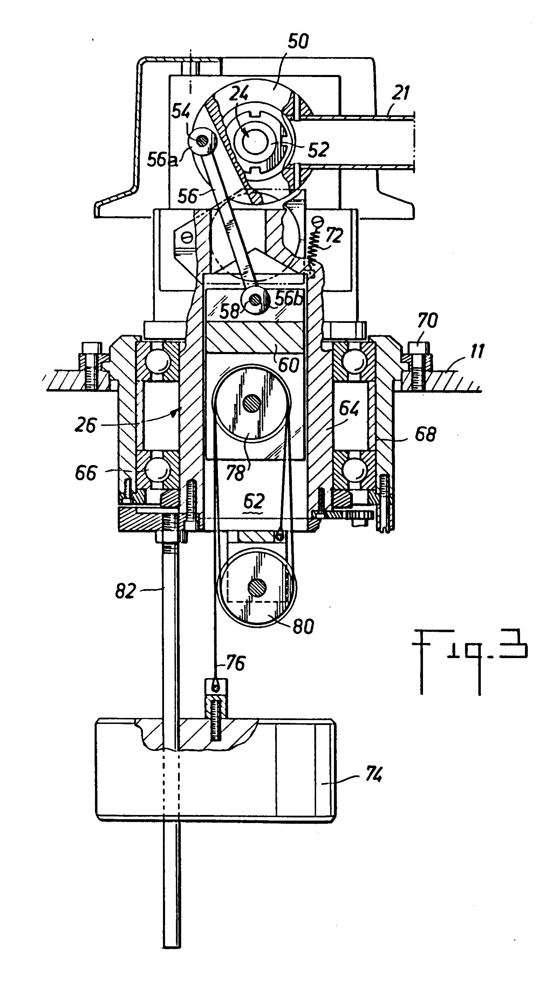

La première extrémité 21 est articulée relativement à un bâti support 11 de l'appareil 10 par au moins un axe d'articulation 24, 26, de préférence au moins deux axes d'articulation 24, 26, comme représenté. On observera que ces deux axes d'articulation 24, 26, sont disposés perpendiculairement comme clairement visible à la figure 3. Ces articulations seront décrites en détail plus loin.

La sonde d'exploration 2 est montée sur un élément support 30 relié à la deuxième extrémité 22 du bras 20 par au moins deux axes d'articulation 32, 34, 36, 38, perpendiculaires.

Selon la présente invention, le dispositif de positionnement est caractérisé en ce que l'élément support 30 de la sonde d'exploration 2 est relié à la deuxième extrémité 22 du bras 20 par un ensemble d'au moins trois axes d'articulation 32, 34, 36, 38, de préférence d'au moins quatre axes d'articulation comme représenté, disposés successivement perpendiculairement entre eux, ledit ensemble étant disposé dans l'espace de manière à occuper un volume limité 40, au voisinage immédiat de la sonde d'exploration.

On observera que selon le mode de réalisation préféré représenté, le dispositif de positionnement 1 selon l'invention est du type à six axes d'articulation 24, 26, 32, 34, 36, 38 et est caractérisé en ce que quatre 32, 34, 36, 38, de ces axes sont disposés à la deuxième extrémité 22 du bras 20, successivement perpendiculairement entre eux.

La structure de chaque articulation va maintenant être décrite en commençant par la première extrémité 21 du bras 20.

En référence à la figure 3, on observera que l'extrémité 21 du bras 20 est articulée relativement au châssis 11 de l'appareil 10 de la manière suivante :

L'extrémité 21 du bras 20 est solidaire ou forme corps avec une roue 50 montée en rotation relativement à un arbre 52 disposé horizontalement. La roue 50 comporte à sa périphérie, donc de manière excentrée, un téton 54 de commande en rotation, sur lequel est fixée une extrémité 56a d'une bielle 56 dont l'autre extrémité 56b est fixée à un autre téton 58 solidaire d'un chariot 60 monté déplaçable verticalement en translation dans une cavité 62 d'un élément cylindrique 64 lui-même monté en rotation selon un axe vertical Y-Y perpendiculaire à l'arbre horizontal 52, par un système de roulement à billes 66, relativement à un élément cylindrique fixe 68 solidarisé du châssis 11 par des moyens classiques 70 tels que vis. Le chariot 60 est en permanence rappelé vers le haut par au moins un élément de rappel 72 tel qu'un ressort et est en permanence rappelé vers le bas par un système de contre-poids 74 suspendu au chariot 60 par un câble 76 ou similaire s'enroulant par exemple sur deux galets de renvois 78, 80. De cette manière, on peut équilibrer le poids du dispositif de positionnement selon l'invention de manière à ce qu'une commande manuelle de celui-ci permette de manipuler le bras sans effort et de le maintenir dans une position donnée sans problème. Le contrepoids 74 coulisse verticalement en étant guidé par une tige de guidage 82.

En résumé, on observera que le bras 22 est monté articulé relativement au châssis 11, dans le plan vertical et dans le plan horizontal, respectivement par deux articulations 24 et 26.

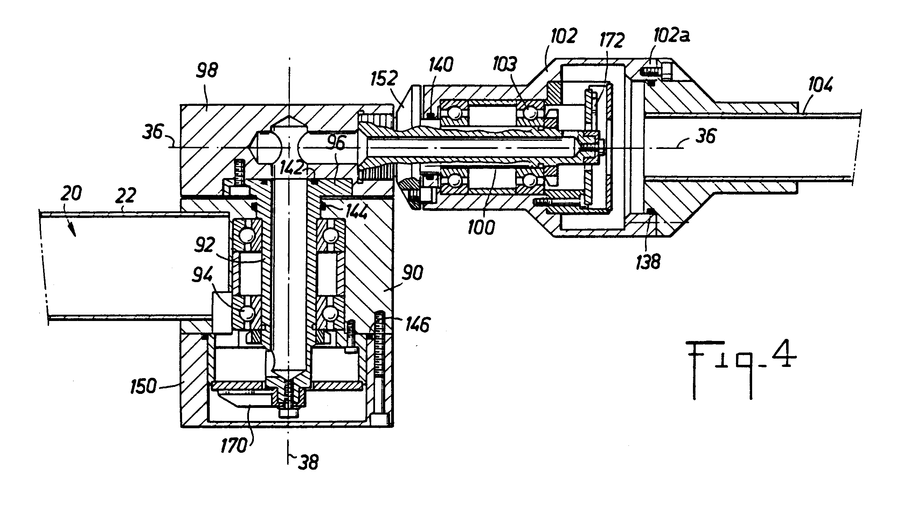

En référence à la figure 4 on peut observer que la deuxième extrémité 22 du bras 20 supporte latéralement une pièce cylindrique 90 à l'intérieur de laquelle est disposé de manière rotative un manchon cylindrique 92, par la présence de roulement à billes 94. Par sa disposition, le manchon 92 est monté en rotation relativement à la deuxième extrémité 22 du bras 20. Ce manchon 92 se termine à une extrémité par un épaulement annulaire 96 permettant la fixation d'un élément de liaison cylindrique 98 auquel est fixé latéralement, c'est-à-dire perpendiculairement à l'axe de rotation du manchon 92 lui-même perpendiculaire à l'axe longitudinal du bras 20, un élément tubulaire 100 autour duquel est montée rotative et coaxialement (en 103) la nouvelle pièce cylindrique 102 à l'extrémité libre 102a de laquelle est fixé un élément de liaison coudé 104 que l'on voit bien à la figure 2 et qui se trouve sensiblement dans le plan perpendiculaire au bras 20 passant par l'axe 38 en position de travail représentée aux figures 1 et 2, pour laquelle la sonde est aussi disposée perpendiculairement au bras 20.

On conçoit ainsi que le premier axe d'articulation 38 solidaire de la deuxième extrémité 22 du bras 20 est disposé perpendiculairement à l'axe longitudinal du bras et est avantageusement disposé horizontal, comme représenté, comme l'axe d'articulation 24.

De même, le deuxième axe d'articulation 36, depuis la deuxième extrémité 22 du bras 20, défini par le tube 100, est disposé dans un plan perpendiculaire au premier axe d'articulation 38, qui est distinct et décalé latéralement relativement au plan de pivotement du bras 20 défini par l'axe d'articulation 24 solidaire de la première extrémité 21 du bras 20, c'est-à-dire ici le plan de pivotement vertical. En outre la partie fixe du deuxième axe d'articulation 36, constituée par l'élément tubulaire 100, est située dans le prolongement (coaxialement) de la partie rotative,constituée par la pièce cylindrique 102, du premier axe d'articulation 38.

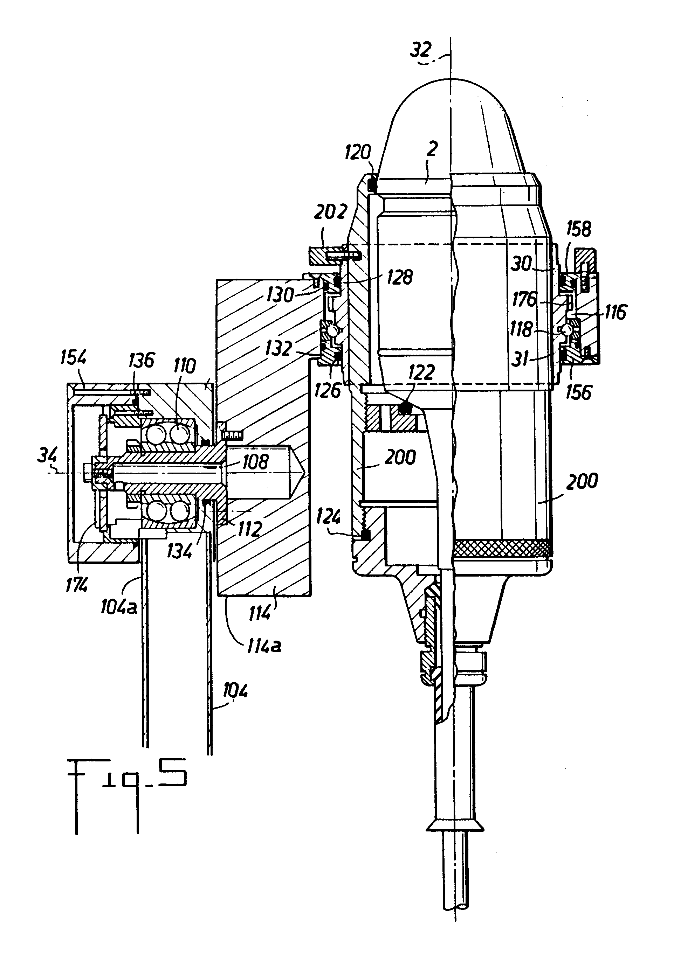

En référence à la figure 5, on voit que l'élément de liaison coudé 104, à son extrémité libre 104a, opposée à la pièce cylindrique 102 de l'axe d'articulation 36, supporte extérieurement unie pièce cylindrique 106 disposée perpendiculairement au plan général de l'élément coudé 104. A l'intérieur de la pièce cylindrique 106, un manchon 108 est monté rotatif et coaxialement par un système approprié tel que roulement à bille 110. Ce manchon 108 comporte aussi un épaulement annulaire 112 permettant d'y fixer une pièce intermédiaire 114 ayant en coupe un profil en L, par exemple. De préférence, l'extrémité libre 114a de la base du L est fixée à l'épaulement annulaire 112, tandis que la barre du L comporte une ouverture traversante 116 dans laquelle l'élément support 30 de la sonde d'exploration 2 est monté rotatif et coaxialement, par l'intermédiaire d'un système de rotation approprié 118, par exemple un roulement à bille. Cet élément support 30 comprend aussi une ouverture traversante 31 coaxiale à l'ouverture 116 pour l'insertion coaxiale de la sonde d'exploration 2.

De cette manière, on définit encore, depuis la deuxième extrémité 22 du bras 20, un troisième axe d'articulation 34 relié au deuxième axe d'articulation 36 par un élément de liaison coudé 104, de manière à être disposé hors de l'empattement des deux premiers axes 38, 36, mais habituellement du même côté par rapport au plan de pivotement du bras 20, ainsi qu'un quatrième axe 32 encore disposé perpendiculairement à l'axe de rotation 34, cet axe de rotation 32 étant ainsi parallèle au premier axe 38 et disposé ici horizontalement. Dans la position de travail de départ qui est celle représentée aux figures 1 et 2, l'axe 32 est perpendiculaire au plan de pivotement du bras, et est aussi sensiblement parallèle au plan général de l'élément coudé 104 en étant décalé vers l'extérieur par rapport à l'ensemble bras 20-élément coudé 104. Cette position est la position zéro.

Selon une caractéristique préférée du dispositif de positionnement selon l'invention, l'ensemble des articulations 32, 34, 36, 38 de la deuxième extrémité 22 du bras 20 est réalisé étanche aux fluides, de préférence aux liquides, de manière à être immergeable dans un fluide, de préférence un liquide, en particulier une huile ou de l'eau.

Pour ce faire, on prévoit à toutes les articulations une ou plusieurs bagues ou joints d'étanchéité, tels que 120, 122, 124, 126, 128, 130, 132, 134, 136, pour la figure 5, 138, 140, 142, 144, 146, pour les articulations 36, 38, de la figure 4. Ainsi, toutes les articulations sont fermées de manière étanche, en employant des capuchons de fermeture si nécessaire comme le capuchon 150 pour l'articulation 38 ou le capuchon 152 pour l'articulation 36, figure 4, ainsi que le capuchon 154, pour l'articulation 34 et les éléments d'étanchéité annulaires 156, 158 de l'articulation 32 de la figure 5.

Ainsi, on observera que selon la présente invention, on peut positionner dans n'importe quelle position de l'espace la sonde d'exploration 2, étant donné que cette sonde d'exploration 2 dispose d'un maximum (ici quatre) de degrés de liberté à son voisinage immédiat, grâce à l'ensemble d'articulations 32, 34, 36, 38 disposé dans un volume de l'espace réduit.

On observera encore que cette sonde d'exploration 2 est montée en rotation sur elle-même grâce à l'axe d'articulation en rotation 32, coïncidant avec son axe de symétrie. En outre, lorsque cette sonde d'exploration est une sonde à ultrasons du type sectoriel, cette sonde 2 est encore capable de réaliser des plans de coupe sectoriels selon des plans de coupe couvrant successivement tout l'espace.

Ainsi, lorsque ce dispositif de positionnement selon l'invention 1 est incorporé dans un appareil générateur d'ondes de choc de fréquence élevée 10, par exemple comportant un réflecteur ellipsoïdal 12, les débattements du bras selon l'invention 20 permettent la visualisation et le repérage d'une concrétion, par exemple un calcul rénal ou biliaire, dans une zone de 200 mm x 200 mm x 200 mm avec une précision de ± 1 mm à l'aide par exemple de la sonde à ultra-sons sectoriel 2 et d'un échotomographe 16 à temps réel de l'industrie. Le bras 20 laisse à l'opérateur la possibilité de manipuler la sonde 2 dans toutes les directions et tous les sens de l'espace.

De ce fait, avec le bras 20 du dispositif de positionnement 1 selon l'invention, on peut par exemple visualiser un rein sous toutes les incidences. On peut ainsi effectuer un balayage ou "scan" complet du rein par des coupes sagitales, frontales, obliques et transversales, tout en ayant la possibilité du repérage de calculs.

L'exploration ultrasonore multidirectionnelle permet en outre de visualiser partiellement son état de destruction à la suite des tirs par l'observation sur l'image échographique de la mobilité des fragments.

Tous ces avantages techniques déterminants sont clairement apparents à l'homme du métier.

En outre, la réalisation étanche de l'ensemble des articulations situées à la deuxième extrémité libre 22 du bras 20 permet de pouvoir immerger le bras, ce qui constitue un avantage essentiel pour permettre de positionner la sonde même dans le liquide, eau ou huile, remplissant le réflecteur ellipsoïdal 12, ou situé dans une baignoire entourant le réflecteur ellipsoïdal 12 dans laquelle est en partie immergé le patient.

On conçoit ainsi que l'invention fournit une solution nouvelle, non-évidente relativement aux dispositifs de positionnement antérieurement connus et aboutit à des avantages techniques déterminants, particulièrement inattendus pour un homme du métier.

Bien entendu, l'invention comprend dans sa portée tous les moyens constituant des équivalents techniques des moyens décrits ainsi que leurs diverses combinaisons. Ainsi, la sonde d'exploration peut être remplacée par un dispositif quelconque. Par exemple, il peut s'agir d'un pistolet de projection d'un milieu quelconque, comme une peinture, un vernis, un ciment. Ainsi, ce dispositif de positionnement peut être incorporé dans tout type d'appareil, pour lequel de préférence se pose un problème d'exiguïté dans l'espace ou d'étanchéité.

Avantageusement, on peut prévoir l'entraînement en rotation de l'élément support 30 de la sonde 2 par un organe moteur, grâce à des moyens de mise en rotation, tels que des dents 176, en formant ainsi une roue dentée entraînée en rotation par l'organe moteur, non représenté.

On peut aussi prévoir l'incorporation de détecteurs d'angle de rotation à chaque axe d'articulation dont la valeur mesurée est prise en compte automatiquement par le calculateur et sert à déterminer la position exacte de la sonde 2 et donc de la cible 18.

Ce détecteur d'angle peut être formé par un potentiomètre angulaire intégré au système bien connu de l'homme du métier et par exemple décrit dans US 4 486 114 TECHNICARE.

On prévoit encore avantageusement un moyen de freinage, tel qu'un patin, (170, 172, 174) de rotation à chaque articulation (38, 36, 34 respectivement) pour maintenir le positionnement du bras en une position quelconque fixée manuellement par l'opérateur.

Comme cela résulte de ce qui précède, le dispositif de positionnement dans l'espace selon l'invention rend possible une acquisition continue, permanente des données, qu'il s'agisse de celles relatives à la position de la sonde dans l'espace ou de celles transmises par la sonde elle-même qui peuvent ainsi être traitées de préférence automatiquement par un calculateur.

Comme on le voit bien en référence à la figure 5, la sonde proprement dite 2 est disposée dans un caisson étanche 200 qui peut être fixé avantageusement de manière démontable, par exemple par un élément de fixation tel qu'une vis 202, dans la partie rotative, constituée ici par l'élément support 30 du quatrième axe d'articulation 32 depuis la deuxième extrémité du bras 20, et qui est pourvue de l'ouverture traversante 31 d'insertion de la sonde 2. En outre, avantageusement, la longueur du bras 20 est telle que la deuxième extrémité 22 du bras 20 supportant la première articulation 38 depuis cette deuxième extrémité 22 est sensiblement à la verticale et habituellement au-dessus de la zone d'exploration comme cela se conçoit bien à partir de la considération des figures 1 et 2. Avantageusement, la longueur du bras 20 est telle qu'en position de travail, le bras 20 est toujours sensiblement en position horizontale comme représenté aux figures 1 et 2 et que le deuxième axe d'articulation 36 depuis la deuxième extrémité 22 du bras 20 est toujours maintenu sensiblement dans un plan vertical, et de même pour l'élément de liaison coudé 104 qui est avantageusement doublement coudé ou gauche et qui comprend un plan général sensiblement dans le plan vertical incluant l'axe d'articulation 36 ou parallèle à l'axe d'articulation 36.

Il est à noter que l'élément coudé 104 se raccorde à son extrémité supérieure sensiblement coaxialement au deuxième axe 36, pour se situer dans son prolongement, tandis qu'à son extrémité inférieure 104a l'élément coudé 104 est perpendiculaire au troisème axe d'articulation 34.

Selon encore une autre caractéristique avantageuse, la longueur du bras 20 est telle que la deuxième extrémité 22 du bras 20 constitue le sommet, qui est habituellement de position sensiblement fixe, d'un cône d'angle au sommet compris entre 45 et 90°, de préférence entre 50 et 70°, encore de préférence d'environ 60°, dans lequel se déplace le point d'intersection des axes des troisième et quatrième articulations, respectivement 34 et 32 depuis la deuxième extrémité 22 du bras 20. De cette manière, on obtient le maximum de positions possibles de la sonde 2 dans un volume de l'espace très réduit. De préférence, la distance D entre le premier axe d'articulation 38 depuis la deuxième extrémité 22 du bras 20 et le quatrième axe d'articulation 32 depuis cette même deuxième extrémité 22 est nettement inférieure à la longueur L du bras définie par la distance entre les axes d'articulation 24 et 22, comme représenté à la figure 2. Avantageusement, cette distance D est de l'ordre de 0,4 à 0,6 fois la longueur L du bras 20 encore de préférence est égale à environ 0,5 fois la longueur L du bras, c'est-à-dire que cette distance D est environ la moitié de la longueur L du bras 20, comme représenté aux figures 1 et 2 notamment.

On comprend ainsi que chaque articulation comprend une partie fixe et une partie mobile (rotative). Selon l'invention, la partie fixe (98-100) (selon son profil général Figure 4), et la partie mobile 102 du deuxième axe d'articulation 36 repéré depuis la deuxième extrémité 22 du bras 20 sont situées dans le prolongement l'une de l'autre. On observera en outre que cette partie rotative 102 est au voisinage immédiat de la partie rotative 92 de la première articulation 38, en formant un profil en L (Figure 4). La pièce 98 est commune à la partie rotative 92 et à la partie fixe 100.

Certaines au moins des parties fixes des autres axes d'articulation peuvent être perpendiculaires aux parties mobiles associées. Ceci est en particulier le cas pour le troisième axe 34 (partie fixe 104-106 perpendiculaire à partie mobile 108) et le quatrième axe 32 (partie fixe 114 dont la barre comportant l'ouverture 116 a un profil perpendiculaire à la partie mobile ou rotative 30). De même, pour la première articulation 38, le profil général de la partie fixe (formée par le bras 20 et la pièce 90) est perpendiculaire à la partie mobile ou rotative 92.

## Revendications

1. Dispositif de positionnement dans l'espace d'une sonde d'exploration (2), par exemple une sonde à ultra-sons, de type à 6 axes d'articulation au total, comprenant un bras (20) essentiellement rigide ayant une première extrémité (21) et une deuxième extrémité (22), la première extrémité (21) est articulée relativement à un bâti support (10) par au moins un axe d'articulation (24, 26), de préférence au moins deux axes d'articulation, et ladite sonde d'exploration (2) est montée sur un élément support (30) relié à ladite deuxième extrémité (22) du bras (20) par au moins deux axes d'articulation perpendiculaires (32, 34), caractérisé en ce que l'élément support (30) de la sonde d'exploration (2) est relié à la deuxième extrémité (22) du bras (20) par un ensemble de quatre axes d'articulation (32, 34, 36, 38), disposés successivement perpendiculairement entre eux, un élément de liaison coudé (104) est prévu pour relier le deuxième axe d'articulation (36) et le troisième axe d'articulation (34) respectivement repéré depuis la deuxième extrémité (22) du bras (20), de manière que le troisième axe d'articulation (34) soit disposé hors de l'empattement défini par les premier (38) et deuxième axes (36) d'articulation repérés depuis la deuxième extrémité (22) du bras, ledit ensemble étant disposé dans l'espace de manière à occuper un volume limité (40), au voisinage immédiat de ladite sonde d'exploration (2), tout en offrant un maximum de possibilités de positionnements dans l'espace de ladite sonde (2).

2. Dispositif de positionnement selon la revendication 1 caractérisé en ce que le point d'intersection entre le troisième axe d'articulation (34) et le quatrième axe d'articulation (32) repéré depuis la deuxième extrémité (22) du bras (20), se déplace dans un plan perpendiculaire au deuxième axe d'articulation (36) repéré depuis la deuxième extrémité (22) du bras (20) en décrivant au moins un arc de cercle lors d'une rotation autour du deuxième axe d'articulation (36).

3. Dispositif de positionnement selon la revendication 1 ou 2, caractérisé en ce que la sonde d'exploration (2) est montée en rotation sur elle-même selon un axe de rotation qui coïncide avec le quatrième axe d'articulation (32) repéré depuis la deuxième extrémité (22) du bras (20).

4. Dispositif de positionnement selon l'une des revendications 1 à 3, caractérisé en ce que le plan général de l'élément support (30) de la sonde sur le quatièreme axe d'articulation (32) repéré depuis la deuxième extrémité (22) du bras (20) est décalé dans l'espace relativement au point d'intersection du troisième axe (34) et du quatrième axe (32) d'articulation repérés depuis la deuxième extrémité (22) du bras (20), ce décalage étant disposé avantageusement vers l'extérieur en position de travail.

5. Dispositif de positionnement selon l'une des revendications 1 à 4, chaque articulation comprenant une partie fixe et une partie mobile, caractérisé en ce que la partie fixe et la partie mobile du deuxième axe d'articulation repéré depuis la deuxième extrémité du bras sont situées dans le prolongement l'une de l'autre ; avantageusement certaines au moins des parties fixes des autres axes d'articulation peuvent être perpendiculaires aux parties mobiles associées, en particulier pour le troisième et le quatrième axe d'articulation.

6. Dispositif de positionnement selon l'une quelconque des revendications 1 à 5, caractérisé en ce que la longueur du bras (20) est telle que la deuxième extrémité du bras (22) supportant la première articulation (38) parmi les quatre articulations de la deuxième extrémité du bras, est sensiblement à la verticale, et avantageusement au-dessus, de la zone d'exploration ou d'examen.

7. Dispositif de positionnement selon l'une quelconque des revendications 1 à 6, caractérisé en ce que la longueur du bras (20) est telle qu'en position de travail le bras est toujours sensiblement en position horizontale tandis que de préférence le deuxième axe d'articulation (36) repéré depuis la deuxième extrémité du bras est toujours maintenu sensiblement dans un plan vertical.

8. Dispositif de positionnement selon l'une quelconque des revendications 1 à 7, caractérisé en ce que la longueur du bras (20) est telle que la deuxième extrémité du bras constitue le sommet, de position sensiblement fixe, d'une cône d'angle au sommet compris entre 45 et 90°, de préférence entre 50 et 70°, encore de préférence d'environ 60°, dans lequel se déplace le point d'intersection des troisième et quatrième axe d'articulation repérés depuis la deuxième extrémité du bras.

9. Dispositif de positionnement selon l'une quelconque des revendications 1 à 8, caractérisé en ce que l'ensemble des articulations de la deuxième extrémité du bras est réalisé étanche aux fluides, de préférence aux liquides, de manière à être immergeable dans un fluide, de préférence un liquide, en particulier de l'eau ou une huile.

10. Dispositif de positionnement selon l'une quelconque des revendications précédentes, caractérisé en ce que la sonde d'exploration (2) est disposée dans un container étanche (200) qui est fixé de manière démontable dans la partie rotative (30) du quatrième axe d'articulation (32) repéré depuis la deuxième extrémité du bras, qui comporte avantageusement une ouverture traversante (116) dans laquelle la sonde (2) peut être insérée.

**11.** Dispositif de positionnement selon l'une quelconque des revendications précédentes, caractérisé en ce que le premier d'axe d'articulation (38) solidaire de la deuxième extrémité (22) du bras (20)est disposé perpendiculaire à l'axe longitudinal du bras.

**12.** Dispositif de positionnement selon l'une quelconque des revendications précédentes, caractérisé en que le deuxième axe d'articulation (36) depuis la deuxième extrémité (22) du bras (20) est disposé dans un plan perpendiculaire au premier axe d'articulation (38), qui est distinct relativement au plan de pivotement du bras (20) défini par l'articulation (24) solidaire de la première extrémité (21) du bras (20).

**13.** Dispositif de positionnement selon la revendication 9, caractérisé en ce que la partie fixe (114) du quatrième axe d'articulation (32) a en coupe un profil en L, la base du L est fixée à la partie rotative (108, 112) du troisième axe d'articulation (34) tandis que la barre du L comporte l'ouverture traversante (116) précitée, de préférence l'élément support (30) de la sonde d'exploration (2) comprend des moyens de mise en rotation (176), tels que des dents, entraînés en rotation par un organe moteur.

**14.** Dispositif de positionnement selon une quelconque des revendications précédentes, caractérisé en ce que le système d'articulation de la première extrémité (21) du bras (20) comprend un système à contrepoids (74) permettant une manipulation aisée du bras (20) et son maintien en une position quelconque de celui-ci.

**15.** Dispositif de positionnement selon l'une quelconque des revendications précédentes, caractérisé en ce qu'il comprend un moyen de freinage, tel qu'un patin (170,172, 174), de rotation à chaque articulation pour maintenir le positionnement du bras en une position quelconque fixée manuellement par l'opérateur.

**16.** Appareil générateur d'impulsions de fréquence élevée pour la destruction de cibles telles que des tissus, concrétions, notamment des lithiases rénales, biliaires, caractérisé en ce qu'il comprend au moins un dispositif de positionnement tel que défini selon l'une des revendications précédentes, de préférence chaque articulation est pourvue d'un détecteur d'angle de rotation dont la valeur mesurée peut être prise en compte automatiquement par un calculateur et servir à déterminer la position exacte dans l'espace de la sonde d'exploration (2) et donc de la cible (18).

**Claims**

**1.** Device for positioning in space a scanning probe (2), for example an ultra-sound probe, of the type having a total of six pivot pins, comprising an essentially rigid arm (20) having a first end (21) and a second end (22), the first end (21) is articulated relatively to a support frame (10) by at least one pivot pin (24, 26), and preferably at least two pivot pins, and said scanning probe (2) is mounted on a support element (30) connected to said second end (22) of the arm (20) by at least two perpendicular pivot pins (32, 34), characterized in that the element (30) supporting the scanning probe (2) is connected to the second end (22) of the arm (20) by an assembly of four pivot pins (32, 34, 36, 38), disposed successively perpendicularly to one another, a bent connecting element (104) is provided to connect the second pivot pin (36) to the third pivot pin (34) respectively located from the second end (22) of the arm (20) so that the third pivot pin (34) is disposed outside the square elbow defined by the first (38) and second pivot pins (36) located from the second end (22) of the arm, said assembly being disposed in space so as to occupy a limited volume (40), in the immediate vicinity of said scanning probe (2), while offering the maximum possibilities of positioning in space of said probe (2).

**2.** Positioning device according to claim 1, characterized in that the intersection point between the third pivot pin (34) and the fourth pivot pin (32) located from the second end (22) of the arm (20), moves in a plane perpendicular to the second pivot pin (36) located from the second end (22) of the arm (20) by describing at least one arc of a circle during a rotation about the second pivot pin (36).

**3.** Positioning device according to claim 1 or 2, characterized in that the scanning probe (2) is mounted for rotation on itself about an axis of rotation which coincides with the fourth pivot pin (32) located from the second end (22) of the arm (20).

**4.** Positioning device according to one of claims 1 to 3, characterized in that the general plane of the element (30) for supporting the probe on the fourth pivot pin (32) located from the second end (22) of the arm (20) is offset in space relatively to the intersection point of the third pivot pin (34) and of the fourth pivot pin (32) located from the second end (22) of the arm (20), this offsetting being advantageously towards the outside in working position.

5. Positioning device according to one of claims 1 to 4, each articulation comprising a fixed part and a mobile part, characterized in that the fixed part and the mobile part of the second pivot pin located from the second end of the arm are situated one in extension of the other ; advantageously at least some of the fixed parts of the other pivot pins can be perpendicular to their respective mobile parts, in particular for the third and fourth pivot pin.

6. Positioning device according to any one of claims 1 to 5, characterized in that the length of the arm (20) is such that the second end (22) of the arm supporting the first articulation (38) among the four articulations of the second end of the arm, is substantially vertical, and advantageously above the scanning or control zone.

7. Positioning device according to any one of claims 1 to 6, characterized in that the length of the arm (20) is such that in working position the arm is always substantially in horizontal position while preferably the second pivot pin (36) located from the second end of the arm is always kept substantially in a vertical plane.

8. Positioning device according to any one of claims 1 to 7, characterized in that the length of the arm (20) is such that the second end of the arm constitutes the apex, of substantially fixed position, of an angular cone with an apex comprised between 45 and 90°, preferably between 50 and 70°, still preferably about 60°, in which the intersection point of the third and fourth pivot pins located from the second end of the arm moves.

9. Positioning device according to any one of claims 1 to 8, characterized in that the assembly of the articulations of the second end of the arm is made fluid-, and preferably liquid-tight, so as to be immersable in a fluid, preferably a liquid, particularly water or an oil.

10. Positioning device according to any one of the preceding claims, characterized in that the scanning probe (2) is disposed in a sealed container (200) which is removably fixed in the rotary part (30) of the fourth pivot pin (32) located from the second end of the arm, which advantageously comprises a through opening (116) in which the probe (2) can be inserted.

11. Positioning device according to any one of the preceding claims, characterized in that the first pivot pin (38) fast with the second end (22) of the arm (20) is disposed perpendicularly to the longitudinal axis of the arm.

12. Positioning device according to any one of the preceding claims, characterized in that the second pivot pin (36) from the second end (22) of the arm (20) is disposed in a plane perpendicular to the first pivot pin (38), which is separate relatively to the plane of pivoting of the arm (20) defined by the articulation (24) fast with the first end (21) of the arm (20).

13. Positioning device according to claim 9, characterized in that the fixed part (114) of the fourth pivot pin (32) has an L-shaped cross-section, the base of the L is fixed to the rotary part (108, 112) of the third pivot pin (34), while the bar of the L comprises said through opening (116), preferably the support element (30) supporting the scanning probe (2) comprises rotating means (176), such as teeth, driven in rotation by a drive member.

14. Positioning device according to any one of the preceding claims, characterized in that the system of articulation of the first end (21) of the arm (20) comprises a counterweight system (74) enabling the arm (20) to be easily manipulated and kept in any position.

15. Positioning device according to any one of the preceding claims, characterized in that it comprises a rotation braking means, such as a pivoting shoe (170, 172, 174), at each articulation in order to keep the arm in any position set manually by the operator.

16. Apparatus for generating high frequency pulses for the destruction of targets such as tissues, biliary concretions, kidney stones, characterized in that it comprises at least one positioning device as defined according to one of the preceding claims, preferably each articulation is equipped with a detector for detecting the angle of rotation of which the measured value can be automatically recorded by a calculator and serve to determine the exact position in space of the scanning probe (2) and therefore of the target (18).

**Patentansprüche**

1. Vorrichtung zum Positionieren einer Untersuchungssonde (2), z.B. einer Ultraschallsonde, mit insgesamt sechs Gelenkachsen im Raum, umfassend einen im wesentlichen starren Arm (20) mit einem ersten Ende (21) und einem zweiten Ende (22), wobei das erste Ende (21) über mindestens eine Gelenkachse (24, 26), vorzugsweise mindestens zwei Gelenkachsen, gegenüber einem Traggestell (10) gelenkig befestigt ist und die Untersuchungssonde (2) auf einem Trägerelement (30) montiert ist, das über mindestens zwei zueinander senkrechte Gelenkachsen (32, 34) mit dem zweiten Ende (22) des Arms (20) verbunden ist, dadurch gekennzeichnet, daß das Trägerelement (30) der Untersuchungssonde (2) durch ein System von vier Gelenkachsen (32, 34, 36, 38), die aufeinanderfolgend senkrecht zueinander angeordnet sind, mit dem zweiten Ende (22) des Arms (20) verbunden ist, ein knieförmiges Verbindungsstück (104) zur Verbindung der zweiten Gelenkachse (36) mit der dritten Gelenkachse (34), mit der Zählung jeweils ausgehend vom zweiten Ende (22) des Arms (20), vorgesehen ist, sodaß sich die dritte Gelenkachse (34) außerhalb der Spannweite befindet, die durch die erste (38) und zweite (36) Gelenkachse, mit der Zählung ausgehend vom zweiten Ende (22) des Arms, festgelegt ist, welches System derart im Raum angeordnet ist, daß es ein begrenztes Volumen (40) in unmittelbarer Nähe der Untersuchungssonde (2) einnimmt, wobei aber ein Maximum an Positionierungsmöglichkeiten für die Sonde (2) im Raum gegeben ist.

2. Positioniervorrichtung nach Anspruch 1, dadurch gekennzeichnet, daß sich der Schnittpunkt zwischen der dritten Gelenkachse (34) und der vierten Gelenkachse (32), mit der Zählung ausgehend vom zweiten Ende (22) des Arms (20), bei einer Drehung um die zweite Gelenkachse (36) in einer Ebene senkrecht zur zweiten Gelenkachse (36), mit der Zählung ausgehend vom zweiten Ende (22) des Arms (20), unter Beschreibung mindestens eines Kreisbogens verlagert.

3. Positioniervorrichtung nach Anspruch 1 oder 2, dadurch gekennzeichnet, daß die Untersuchungssonde (2) entsprechend einer Drehachse, die mit der vierten Gelenkachse (32), gezählt ausgehend vom zweiten Ende (22) des Arms (20), zusammenfällt, um sich selbst drehbar gelagert ist.

4. Positioniervorrichtung nach einem der Ansprüche 1 bis 3, dadurch gekennzeichnet, daß die allgemeine Ebene des Trägerelements (30) der Sonde auf der vierten Gelenkachse (32), mit der Zählung ausgehend vom zweiten Ende (22) des Arms (20), gegenüber dem Schnittpunkt der dritten Gelenkachse (34) mit der vierten Gelenkachse (32), ausgehend vom zweiten Ende (22) des Arms (20), im Raum versetzt ist, wobei diese Versetzung vorteilhafterweise in der Arbeitsposition nach außen gerichtet ist.

5. Positioniervorrichtung nach einem der Ansprüche 1 bis 4, bei welcher jede Gelenkung einen feststehenden Teil und einen beweglichen Teil aufweist, dadurch gekennzeichnet, daß der feststehende Teil und der bewegliche Teil der zweiten Gelenkachse, gezählt ausgehend vom zweiten Ende des Arms, in Verlängerung voneinander angeordnet sind, wobei vorteilhafterweise zumindest einige der feststehenden Teile der anderen Gelenkachsen senkrecht zu den zugehörigen beweglichen Teilen sein können, insbesondere bei der dritten und der vierten Gelenkachse.

6. Positioniervorrichtung nach einem der Ansprüche 1 bis 5, dadurch gekennzeichnet, daß die Länge des Arms (20) derart ist, daß das zweite Armende (22), das das erste Gelenk (38) von den vier Gelenken des zweiten Endes des Arms trägt, im wesentlichen in der Vertikalen und vorteilhafterweise oberhalb von der Untersuchungs- oder Prüfzone liegt.

7. Positioniervorrichtung nach einem der Ansprüche 1 bis 6, dadurch gekennzeichnet, daß die Länge des Arms (20) derart ist, daß sich der Arm in der Arbeitsstellung immer im wesentlichen in horizontaler Position befindet, während vorzugsweise die zweite Gelenkachse (36), gezählt ausgehend vom zweiten Ende des Arms, immer im wesentlichen in einer vertikalen Ebene gehalten ist.

8. Positioniervorrichtung nach einem der Ansprüche 1 bis 7, dadurch gekennzeichnet, daß die Länge des Arms (20) derart ist, daß das zweite Ende des Arms die im wesentlichen feststehende Spitze eines Kegels mit einem Kegelwinkel zwischen 45 und 90°, vorzugsweise zwischen 50 und 70°, besonders bevorzugt von etwa 60°, bildet, in welchem sich der Schnittpunkt der dritten mit der vierten Gelenkachse, gezählt ausgehend vom zweiten Ende des Arms, verlagert.

9. Positioniervorrichtung nach einem der Ansprüche 1 bis 8, dadurch gekennzeichnet, daß das Gelenksystem des zweiten Endes des Arms fluiddicht, vorzugsweise flüssigkeitsdicht, ausgeführt ist, sodaß es in ein Fluid, vorzugsweise in eine Flüssigkeit, insbesondere Wasser oder ein Öl, eingetaucht werden kann.

10. Positioniervorrichtung nach einem der vorhergehenden Ansprüche, dadurch gekennzeichnet, daß die Untersuchungssonde (2) in einem dichten Behälter (200) angeordnet ist, welcher abnehmbar im drehbaren Teil (30) der vierten Gelenkachse (32), gezählt ausgehend vom zweiten Ende des Arms, befestigt ist, der vorteilhafterweise eine durchgehende Öffnung (116) aufweist, in welche die Sonde (2) eingesetzt werden kann.

11. Positioniervorrichtung nach einem der vorhergehenden Ansprüche, dadurch gekennzeichnet, daß die erste Gelenkachse (38), die mit dem zweiten Ende (22) des Arms (20) verbunden ist, senkrecht zur Längsachse des Arms angeordnet ist.

12. Positioniervorrichtung nach einem der vorhergehenden Ansprüche, dadurch gekennzeichnet, daß die zweite Gelenkachse (36), ausgehend vom zweiten Ende (22) des Arms (20), in einer zur ersten Gelenkachse (38) senkrechten Ebene liegt, die sich gegenüber der Schwenkebene des Arms (20), die von der mit dem ersten Ende (21) des Arms (20) verbundenen Gelenkanordnung (24) festgelegt ist, unterscheidet.

13. Positioniervorrichtung nach Anspruch 10, dadurch gekennzeichnet, daß der feststehende Teil (114) der vierten Gelenkachse (32) im Schnitt ein L-förmiges Profil hat, wobei die Basis des L am drehbaren Teil (108, 112) der dritten Gelenkachse (34) befestigt ist, während der Schenkel des L die durchgehende Öffnung (116) aufweist, und das Trägerelement (30) der Untersuchungssonde (2) vorzugsweise Dreheinrichtungen (176), wie Zähne, aufweist, die durch ein Antriebsorgan drehend antreibbar sind.

14. Positioniervorrichtung nach einem der vorhergehenden Ansprüche, dadurch gekennzeichnet, daß das Gelenksystem des ersten Endes (21) des Arms (20) ein Gegengewichtsystem (74) aufweist, das eine leichtere Handhabung des Arms (20) und sein Halten in beliebiger Position zuläßt.

15. Positioniervorrichtung nach einem der vorhergehenden Ansprüche, dadurch gekennzeichnet, daß sie eine Drehbremseinrichtung, wie einen Schuh (170, 172, 174), bei jedem Gelenk umfaßt, um die Positionierung des Arms in beliebiger, vom Bediener händisch fixierter Position aufrechtzuhalten.

16. Apparat zur Erzeugung von Impulsen erhöhter Frequenz für die Zerstörung von Zielobjekten, wie Geweben, Verhärtungen, insbesondere Nieren- und Gallensteinen, dadurch gekennzeichnet, daß er mindestens eine Positioniervorrichtung nach einem der vorhergehenden Ansprüche umfaßt, vorzugsweise jedes Gelenkmit einem Drehwinkeldetektor versehen ist, dessen Meßwert automatisch von einem Rechner übernommen werden und zur Bestimmung der genauen Position der Untersuchungssonde (2) im Raum und somit des Zielobjekts (18) dienen kann.

Fig.1

EP 0 247 916 B1

Fig.2

Fig.3

Fig. 4

EP 0 247 916 B1

Fig.5

18